Europäisches Patentamt

European Patent Office

Office européen des brevets

(11) Numéro de publication: **0 176 433**
**B1**

## FASCICULE DE BREVET EUROPÉEN

(12)

(51) Int. Cl.⁴: **C 04 B 2/10,** F 27 B 15/14

(45) Date de publication du fascicule du brevet:
**16.12.87**

(21) Numéro de dépôt: **85401812.4**

(22) Date de dépôt: **18.09.85**

(54) Procédé et dispositif de décarbonatation de minéraux par calcination en lit fluidisé.

(30) Priorité: **24.09.84 FR 8414622**

(43) Date de publication de la demande:
**02.04.86 Bulletin 86/14**

(45) Mention de la délivrance du brevet:
**16.12.87 Bulletin 87/51**

(84) Etats contractants désignés:
**BE DE FR GB IT LU NL SE**

(56) Documents cité:
**CH-A-251 381**
**FR-A-1 024 340**
**FR-A-2 507 919**
**US-A-2 548 642**

(73) Titulaire: **ELECTRICITE DE FRANCE Service
National, 2, rue Louis Murat, F-75008 Paris (FR)**

(72) Inventeur: **Baudequin, Francois, 27 rue du Bois
Meste, F-95600 Eaubonne (FR)**
Inventeur: **Leclere, Patrick, place des Tarraches,
F-95000 Jouy- le- Moutier (FR)**

(74) Mandataire: **Moncheny, Michel, c/o Cabinet
Lavoix 2 Place d'Estienne d'Orves, F-75441 Paris
Cedex 09 (FR)**

LIBER, STOCKHOLM 1987

## Description

La présente invention a pour objet un procédé et un dispositif de décarbonatation de minéraux, notamment de calcaire, par calcination en lit fluidisé.

La décarbonatation des minéraux nécessite généralement une grande quantité de chaleur étant donné que ces réactions sont fortement endothermiques. C'est pourquoi on avait souvent proposé de la combiner avec des réactions exothermiques, par exemple avec la combustion de substances organiques (comme décrit dans FR-A-1 029 340). Cependant, les divers carbonates ne se décomposent pas tous avec la même facilité, lorsqu'on les porte à la même température. De plus, l'apport de substances supplémentaires complique le contr*ole de la réaction de décarbonatation et nuit à la pureté des produits fabriqués.

L'invention propose un nouveau procédé et un dispositif qui permettent une plus grande économie d'énergie et, de plus, l'obtention de gaz carbonique très pur valorisable.

L'invention concerne donc un procédé de décarbonatation de minéraux (ce terme désignant en particulier l'ensemble des roches ou minéraux couramment utilisés industriellement) sous forme de fines particules en lit fluidisé, procédé qui est caractérisé en ce qu'au moins une partie du gaz carbonique produit est recyclée pour être utilisée comme seul gaz de fluidisation, le lit fluidisé étant amené à la température désirée de décarbonatation par apport direct de chaleur au sein du lit fluidisé au moyen de dispositifs électriques.

Dans la présente invention l'expression "fines particules" désigne des particules ayant une taille de 50 micro mètres à 1 mm.

L'invention fournit aussi un dispositif pour la mise en oeuvre de ce procédé, comprenant un réacteur de décarbonatation en lit fluidisé muni de moyens de chauffage électriques pour chauffer le réacteur au sein du lit fluidisé, et des moyens pour recycler le gaz carbonique produit comme seul gaz de fluidisation.

Le lit fluidisé peut consister indifféremment en lit fluidisé simple ou à circulation, ou encore en un lit entraîné analogue à un transport pneumatique. Il peut être isotherme ou à gradient, homogène ou à ségrégation. Sa conception peut être du type silo, tunnel ou multi étagé.

Selon l'invention, l'apport d'énergie calorifique nécessaire à la réaction est d'origine électrique et est effectué au sein du lit fluidisé. Cet apport d'énergie peut être effectué notamment à l'aide ae résistances électriques plongeant dans le lit fluidisé. Ces résistances peuvent être constituées d'éléments dits thermoplongeurs, notamment d'éléments en carbure de silicium ou en graphite comportant un gainage réfractaire. En variante on peut utiliser une conduction directe dans le médium fluidisé, ou encore d'autres méthodes telles que le chauffage diélectrique ou par micro-ondes.

La température au sein du lit fluidisé est réglée avantageusement entre la température minimale de décarbonatation à pression atmosphérique et la température de clinkérisation. Dans le cas particulier de la fabrication de chaux, la température du lit fluidisé sera réglée entre 900° et 1000°C (la température des éléments chauffants étant réglée à environ 200°C au-dessus de la température du lit), pour obtenir une chaux très réactive, non clinkérisée sans devoir recourir à des éléments chauffants de surfaces démesurées.

Le gaz de fluidisation et le gaz issu de la décarbonatation (tous deux du $CO_2$) sortent du réacteur et sont séparés des inévitables envols de poudre dans un réchauffeur, par exemple du type cyclone. Après séparation, les poudres sont, dans la mesure du possible, réinjectées dans le réacteur, tandis que dans le réchauffeur le produit entrant (minéral carbonaté) est réchauffé par le $CO_2$ à température élevée et, si possible, soumis à un début de décarbonatation avant son introduction dans le réacteur. Comme alternative, le réchauffeur peut être utilisé sous forme de lit fluidisé, en particulier à gradient, par exemple lit fluidisé tunnel.

Lorsque le produit n'est pas disponible à l'entrée du procédé suffisamment sec et/ou n'a pas la granulométrie souhaitée pour la technologie de réalisation du réacteur, on ajoute un module de tête de procédé comprenant un échangeur de chaleur $CO_2$-air à flux séparés, un broyeur/sécheur de produit entrant (minéral carbonaté) et un séparateur de poudres. L'air peut être introduit dans ce module par un dispositif connu, par exemple par un ventilateur. Cet air réchauffé est soufflé dans le broyeur/sécheur de produit entrant où il remplit le double r*ole d'air de transport pneumatique et d'air de séchage. A la sortie du broyeur/sécheur, le minéral est séparé de l'air, de la vapeur d'eau de séchage et éventuellement des ultra-fins non valorisables dans un dispositif séparateur gaz-poudre, notamment un cyclone. Ainsi le minéral contenant des carbonates pénètre dans le réchauffeur sous forme anhydre et pulvérulente. Le gaz carbonique sortant du réchauffeur de produit entrant, ou le cas échéant de l'échangeur de chaleur $CO_2$-air, est soutiré en partie et peut être le cas échéant valorisé, tandis que la partie non soutirée est recyclée dans le réacteur pour servir de gaz de fluidisation.

Le dispositif peut comprendre aussi un autre échangeur de chaleur $CO_2$-produits de réaction, à flux séparés ou non, servant à réchauffer le gaz carbonique recyclé dans le réacteur et à refroidir les produits de réaction sortant du réacteur. Cet échangeur peut notamment avoir une technologie de réalisation apparentée à celle d'un refroidisseur à clinker ou à pluie de particules. Du fait que le $CO_2$ est introduit à une température proche de l'ambiante (notamment s'il sort de l'échangeur $CO_2$-air), la chaleur sensible des produits de réaction peut être épuisée et totalement, ou presque, récupérée pour réchauffer le $CO_2$. Ceci permet de minimiser ou même de supprimer le refroidisseur final avant conditionnement du minéral décarbonaté pour utilisation ou stockage.

Les principaux avantages du procédé et du dispositif selon l'invention sont :
- obtention d'un produit décarbonaté très réactif sous forme pulvérulente, par exemple chaux ou magnésie;
- valorisation aisée du $CO_2$ issu de la décarbonatation parce que très pur (c'est pratiquement le seul gaz présent dans le procédé);
- très bon rendement énergétique de l'installation (le recyclage du $CO_2$ et son refroidissement à une température proche de l'ambiante diminuent fortement les pertes de chaleur sensibles);
- le chauffage électrique du réacteur permet d'obtenir un produit décarbonaté très pur, sans traces d'inertes ou de corps indésirables habituellement contenus dans les combustibles (soufre, azote, potasse, métaux lourds, etc..);
- la précision d'une régulation d'un chauffage électrique permet de diminuer fortement les risques de clinkérisation du produit et pouvoir valoriser un produit de qualité "chimie fine";
- la versatilité du procédé permet d'envisager des réalisations allant de quelques centaines de kW à plus de 20 MW de puissance installée, ainsi que de faciliter et accélérer les arrêts et démarrages du procédé.

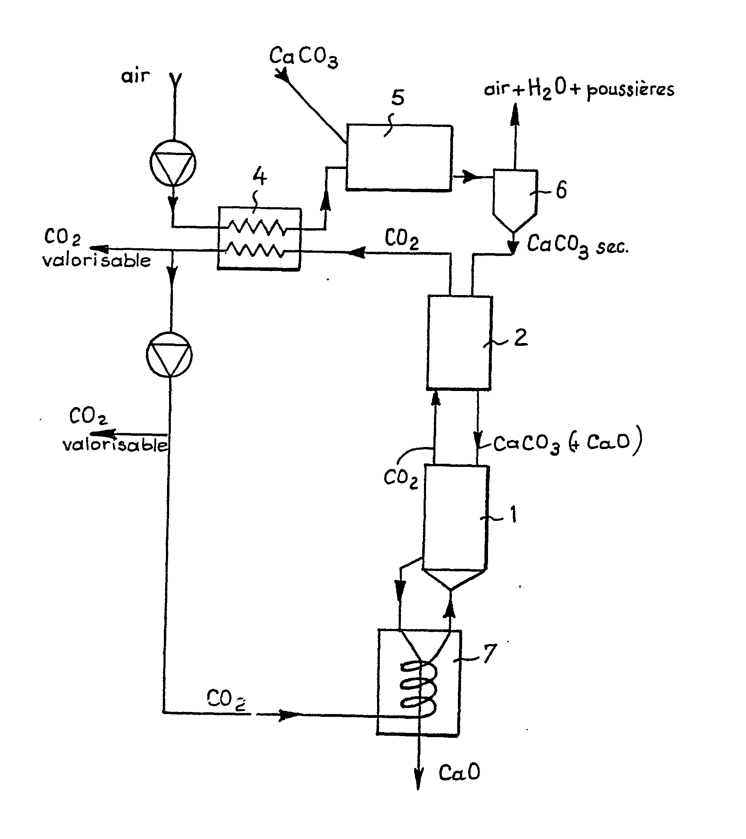

La description suivante en regard de la figure unique annexée, donnée à titre d'exemple non limitatif, permettra de mieux comprendre comment l'invention peut être réalisée.

Sur le schéma du procédé et dispositif représentés sur la figure, la castine (20,9 t/h) ayant un taux d'humidité de 6% est introduite dans un broyeur/sécheur 5 où elle est broyée à une granulométrie dans la frange de 100 à 400 μm et séchée par de l'air chauffé dans l'échangeur de chaleur 4, puis la castine séchée est amenée dans le cyclone 6 où l'air de séchage, la vapeur d'eau et les ultra-fins (poussières) sont extraits du processus à 120°C. Les pertes en poussières représentant environ 10% du produit sec. La castine séchée (17,86 t/h) quitte le module de tête de procédé (comprenant les appareils 4, 5, 6) et entre dans le module de préchauffage -pré-décarbonatation représenté par le réchauffeur 2, comprenant trois cyclones dans lesquels le $CO_2$ sortant du réacteur 1 cède sa chaleur sensible au calcaire et est séparé du calcaire.

Une fois réchauffé et pré-décarbonaté, le calcaire est introduit dans le réacteur 1, en lit fluidisé, (environ 3 m de diamètre et 4 m de haut), chauffé électriquement (1115 kWh/t de chaux) par des résistances en carbure de silicium thermostatées à 1150° et immergées dans le lit, maintenu à une température d'environ 950°C. La perte de charge de la grille de fluidisation ainsi que de la phase dense du lit fluidisé est de 0,5 bar (50 kPa).

La chaux vive (env. 10 t/h), pulvérulente et très réactive, est extraite du lit fluidisé et refroidie dans l'échangeur de chaleur $CO_2$-CaO 7, à flux séparés, où elle cède une partie de sa chaleur au gaz carbonique de fluidisation qui arrive dans le réacteur 1 à une température proche de celle du lit fluidisé, ce qui évite une consommation d'énergie supplémentaire.

Le $CO_2$ provenant de la fluidisation et produit par la décarbonatation quitte le réacteur 1 pour le réchauffeur 2, où il perd une partie de sa chaleur cédée au calcaire, puis est dirigé dans l'échangeur de chaleur $CO_2$-air 4, 'a flux séparés et à contre courant, où il est refroidi à une température d'environ 40°C. Le $CO_2$ ainsi refroidi est mis en mouvement par un dispositif connu par ailleurs, notamment un surpresseur, et du gaz carbonique issu de la décarbonatation est soutiré en un point du dispositif entre la sortie de l'échangeur air/$CO_2$ 4 et l'entrée de l'échangeur $CO_2$/CaO 7.

Ce soutirage de $CO_2$ se fait très simplement, par exemple à l'aide d'une vanne associée à une régulation de pression, par exemple dans le réacteur. Quand la pression du réacteur s'accroît, il faut soutirer plus de $CO_2$ et inversement.

Ce soutirage peut utilement être connecté à un module du procédé servant au conditionnement du $CO_2$ pour sa valorisation, par exemple une installation de liquéfaction de $CO_2$. Le $CO_2$ non soutiré est recyclé au réacteur 1 en passant préalablement dans l'échangeur 7.

## Revendications

1. Procédé de décarbonatation de minéraux sous forme de fines particules solides en lit fluidisé, caractérisé en ce qu'au moins une partie du gaz carbonique produit est recyclée pour être utilisée comme seul gaz de fluidisation, le lit fluidisé étant amené à la température désirée de décarbonatation par apport direct de chaleur au sein du lit fluidisé au moyen de dispositifs électriques.

2. Procédé selon la revendication 1, caractérisé en ce que les dispositifs électriques sont des résistances électriques plongeant dans le lit fluidisé.

3. Procédé suivant la revendication 1 ou la revendication 2, caractérisé en ce qu'on maintient la température au sein du lit fluidisé à une température comprise entre la température de début de décarbonatation et la température de clinkérisation.

4. Procédé selon la revendication 3, caractérisé en ce que l'on décarbonate du carbonate de calcium et l'on régle la température au sein du lit fluidisé à une valeur de 900 à 1000°C.

5. Dispositif pour la mise en oeuvre du procédé selon la revendication 1, caractérisé en ce qu'il comprend un réacteur de décarbonatation (1) en lit fluidisé muni de moyens de chauffage électriques pour chauffer le réacteur au sein du

**0 176 433**

lit fluidisé, et des moyens pour recycler le gaz carbonique produit comme seul gaz de fluidisation.

6. Dispositif selon la revendication 5, caractérisé en ce que les dispositifs électriques sont des résistances électriques plongeant dans le lit fluidisé.

**Patentansprüche**

1. Verfahren zum Entsäuern von Mineralien in Form von feinen Feststoffteilchen im Wirbelbett, dadurch gekennzeichnet, daß wenigstens ein Teil des gebildeten Kohlendioxidgases im Kreislauf geführt wird, um als ainziges Wirbelgas verwendet zu werden, wobei das Wirbelbett durch direkte Zufuhr von Wärme in das Wirbelbett mit Hilfe von elektrischen Vorrichtungen auf die gawünschte Temperatur der Decarbonisierung gebracht wird.

2. Verfahren nach Anspruch 1, dadurch gekennzeichnet, daß die elektrischen Vorrichtungen elektrische Widerstände sind, die in das Wirbelbett tauchen.

3. Verfahren nach Anspruch 1 oder Anspruch 2, dadurch gekennzeichnet, daß man die Temperatur innerhalb des Wirbelbetts bei einer Temperatur hält, die zwischen der Temperatur des Beginns der Decarbonisierung und der Temperatur der Klinkerbildung liegt.

4. Verfahren nach Anspruch 3, dadurch gekennzeichnet, daß man Calciumcarbonat entsäuert und die Temperatur innerhalb des Wirbelbette bei einem Wert von 900 bis 1000°C hält.

5. Vorrichtung für die Durchführung des Verfahrens nach Anspruch 1, dadurch gekennzeichnet, daß sie einen Entsäuerungsreaktor (1) in der Wirbelschicht, der mit Mitteln der elektrischen Beheizung zum Erhitzen des Reaktors innerhalb des Wirbelbetts versehen ist, und Vorrichtungen zur Kreislaufführung des gebildeten Kohlendioxidgases aufweist.

6. Vorrichtung nach Anspruch 5, dadurch gekennzeichnet, daß die elektrischen Vorrichtungen elektrische Widerstände sind, die in das Wirbelbett tauchen.

**Claims**

1. Process for the decarbonation of minerals in the form of fine particles in a fluidized bed, wherein a portion at least of the carbon dioxide produced is recycled to be used as sole fluidizing gas, the fluidized bed being heated to the desired decarbonation temperature by direct heat supply within the fluidized bed by means of electric devices.

2. Process as claimed in claim 1, wherein the electric devices are electric resistances immersed in the fluidized bed.

3. Process as claimed in any one of the above claims, wherein the temperature within the fluidized bed is maintained at a temperature comprised between the incipient decarbonation temperature and the clinkering temperature.

4. Process as claimed in claim 3, wherein calcium carbonate is decarbonated and the temperature within the fluidized bed is set at a value from 900 to 1000°C.

5. Device for the implementation of the process claimed in claim 1, comprising a fluidized bed decarbonation reactor (1) provided with electric heating means for heating the reactor within the fluidized bed, and with means for recycling the carbon dioxide produced as sole fluidizing gas.

6. Device as claimed in claim 5, wherein the electric devices are electric resistances immersed in the fluidized bed.